# EUROPEAN PATENT SPECIFICATION

(11) **EP 4 279 163 B1**
(45) Date of publication and mention of the grant of the patent: **01.10.2025**
(21) Application number: 22739313.9
(22) Date of filing: 05.01.2022
(51) Int. Cl.: B01D 27/08, B01D 24/00, B01D 29/00, B01D 29/21

(54) **FILTER CONTAINER SYSTEM HAVING VENT STRUCTURE**
FILTERBEHÄLTERSYSTEM MIT ENTLÜFTUNGSSTRUKTUR
SYSTÈME DE CONTENANT DE FILTRE COMPORTANT UNE STRUCTURE D'ÉVENT

(30) Priority: 14.01.2021 JP 2021003920
(43) Date of publication of application: 22.11.2023
(73) Proprietor: Roki Techno Co., Ltd., Tokyo 140-8576 (JP)
(72) Inventor: NAKAMURA Yoshinori, Tokyo 140-8576 (JP)
(74) Representative: Grünecker Patent- und Rechtsanwälte PartG mbB
(86) International application number: PCT/JP2022/000124
(87) International publication number: WO 2022/153903

(56) References cited:
- DE-A1- 19 538 883
- DE-C2- 2 555 420
- JP-A- 2003 210 912
- JP-A- 2006 204 988
- JP-A- 2007 501 103
- JP-B2- 3 822 504
- US-A- 5 776 342
- US-A1- 2016 023 143
- US-A1- 2016 023 143

## Description

### Technical Field

The present Invention relates to an air-bleeding mechanism of a filter container.

### Background Art

It is necessary for a fluid machine taking advantage of a fluid flow to perform an air-bleeding so-called in which an air remaining in a flow path is remove from a flow path in an initial state to prevent a pressure loss and promote efficiency of the fluid flow. In the filtering with a filter, the air-bleeding in the flow path of the fluid filtration (hereinafter referred to as "a filtration fluid") is an important process in the initial state.

In contrast, it has become a general method to filter a fluid using a filter container in which a filter cartridge with a filter is detachably incorporated. In particular, such a filter container has a structure in which the entire inside of the filter container is always exposed for replacement of the filter cartridge. Therefore, it is necessary to respectively bleed air from the flow path on the primary side (upstream side) and the flow path on the secondary side (downstream) of the filter of the filter cartridge. In this case, in a filter container in which the primary side of the filter is set as the outer peripheral surface of the filter, it is difficult to bleed air from the flow path on the secondary side (downstream side) of the filter. JP 2003 210 912 A and JP 3822504 B2 disclose a filter container system according to the preamble of claim 1. US 5 776 342 A discloses a capsule type filter assembly that provides increased strength by fixing ends caps of a filter element to a housing at both ends. At one end, a tubular part extends through a hole in the housing and is joined to the housing. An inner space of the tubular part communicates with the inner space of the filter element. In this configuration, the structural strength of the filter housing is enhanced by making the integrated body of the end caps and the filter element function as the reinforcing means for the housing.

### Citation List

### Patent Literature

PTL 1: Japanese Patent Application Laid-Open No. 2018-2086625

### Summary of Invention

### Technical Problem

In the air air-bleeding of the flow path on the secondary side (downstream side) of the filter, in Patent Literature 1 discloses an embodiment in which after making the fuel oil filtration a downward flow, the blade member that causes a spiral flow separates the fuel oil and the air. In addition to the complexity of the air-bleeding structure, however, the air flow for air-bleeding relies only on the natural upward flow of air, so that it has a problem that the air-bleeding effect is not high in actual. Therefore, there is a demand for a filter container that can efficiently bleed air from the flow path on the secondary side of the filter with a simple structure.

### Solution to Problem

It is solved by a filter container system including a filter cartridge including a filter for filtering a fluid, the filter having a flow path having cylindrical shape between a first opening at one end of the filter and a second opening at another end of the filter, a filter container in which the filter cartridge is detachably stored inside of the filter container, the filter container having an air-bleeding mechanism at an upper side of the filter container, a partition contacting with the filter cartridge and the inside of the filter container, the partition causes a formation of an air-bleeding chamber communicating with an air-bleeding opening of the air-bleeding mechanism, and a pipe extending in a vertical direction, to communicate with an inside of the filter cartridge, wherein the filter container has a set-in state in which the filter cartridge is retracted in the inside of the filter container, wherein in the set-in state, the pipe extends into the inside of the flow path to have a gap flow path between the inside of the flow path and the pipe so that an one end of the pipe reaches to the air-bleeding chamber, the partition contacts with the end of the filter, and the air-bleeding chamber fluidly communicate only with the gap flow path, the pipe and air-bleeding opening, wherein in the set-in state, the filter container system is configured to define a flow path is defined so that the fluid flows from an inlet of the bottom of the filter container, the fluid flows into the gap flow path and reaches the air-bleeding chamber through the filter from an outer surface of the filter, and the fluid is discharged out through the discharge outlet of the bottom of the filter container through the pipe from the air-bleeding chamber.

### Advantageous Effects of Invention

According to the present invention, it is possible to efficiently discharge air from the flow path on the secondary side of the filter with a simple structure.

### Brief Description of Drawings

Fig. 1 shows a perspective view of a filter container system as an embodiment of the present invention.
Fig. 2 is a cross-sectional view of a filter container system according to an embodiment of the present invention, showing cross-section X-X of Fig.1.
Fig. 3 is a cross-sectional view of the filter container system of Embodiment 1 of the present invention.
Fig. 4 is a cross-sectional view of the filter container system of Embodiment 1 of the present invention.
Fig. 5 is a cross-sectional view of the filter container system of Embodiment 2 of the present invention.
Fig. 6 is a cross-sectional view of the filter container system of Embodiment 3 of the present invention.

### Description of Embodiments

### [Embodiment 1]

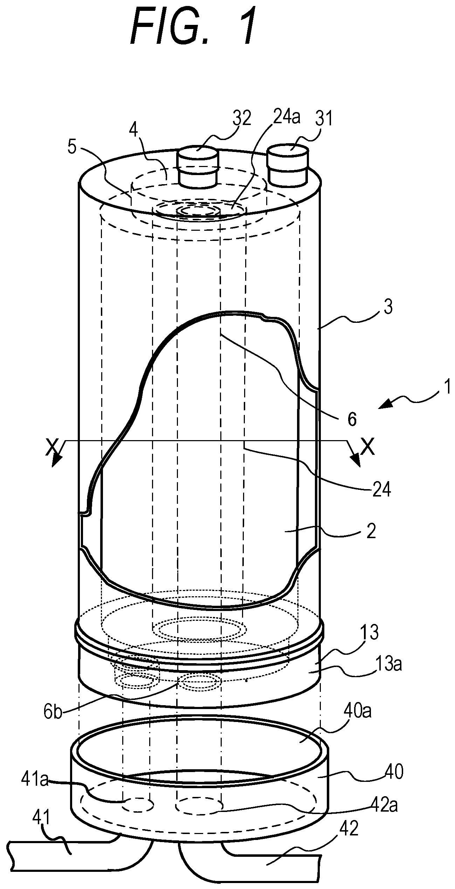

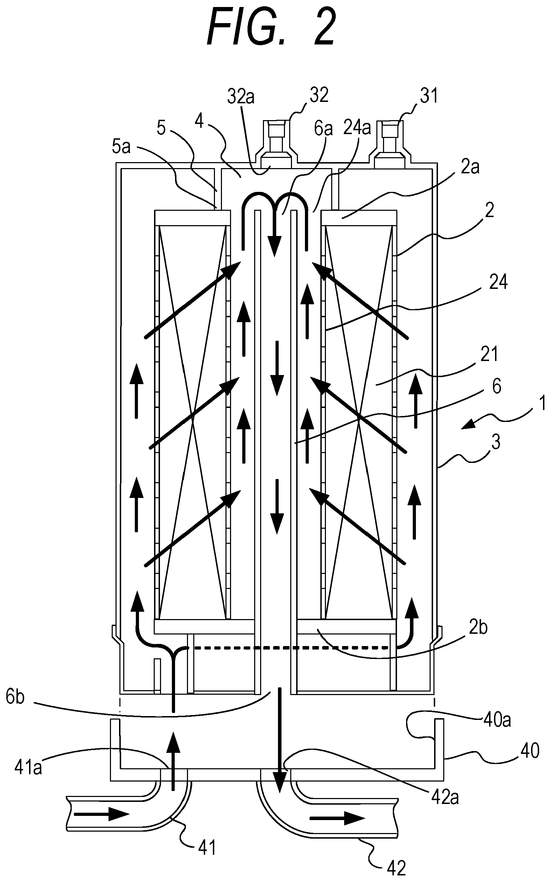

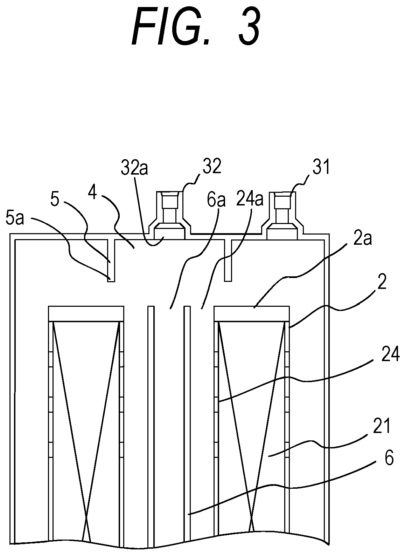

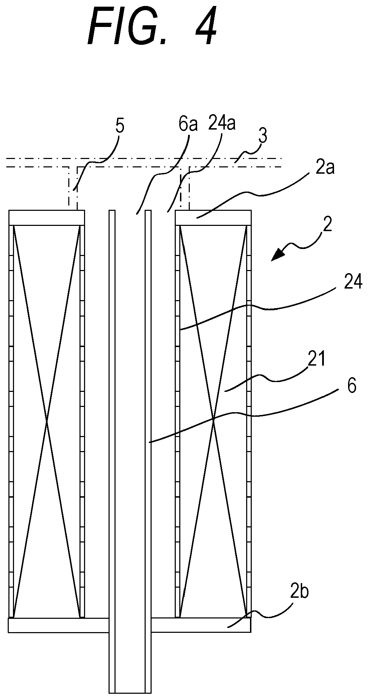

With reference to Figs.1 to 4, it is explained, the filter container system of Embodiment 1 as one of the embodiments of the present invention. The filter container system 1 comprises a filter cartridge 2, a filter container 3, air-bleeding chamber 4, a partition 5 and a pipe 6. Fig. 1 is a perspective view of a filter container system 1 of the present invention. Fig. 2 is a cross-sectional view of a filter container system according to an embodiment of the present invention, showing cross-section X-X of Fig.1. Fig. 3 is an enlarged cross-sectional view of the partition 5 of Embodiment 1. FIG. 4 is a cross-sectional view of the filter cartridge 2 of Embodiment 1, and is a view specifically explaining the pipe 6.

First, it is explained, the structure of the filter container system 1 of Embodiment 1. The filter cartridge 2 has a structure in which a cylindrical filter 21 for filtering a filtration fluid is held by a cartridge support member (not shown). Typically, a filter 21 is made of a porous material such as non-woven fabric. For example, the cartridge support member can be formed as a structure in which the filter 21 is wound around a cylindrical-shaped core having a cylindrical shape, or a structure in which the filter 21 is sandwiched between cylindrical-shaped outer shells. The hollow portion at the center of the cylindrical shape of the filter cartridge 2 is defined as a flow path 24 extending in the longitudinal direction. The flow path 24 has the first opening 6a formed at one end and the second opening 6b formed at another end opposite to the first opening 6a. Typically, the flow path 24 is configured as a cylindrical hollow portion extending along the cylindrical central axis of the filter cartridge 2.

The filter container 3 is a container having a cylindrical-shaped shell structure having a hollow inside, and segregating the filter container 3 between the inside and the outside of the filter container 3. It is possible to detachably fix and set the filter cartridge 2 in the internal hollow portion. The filter container 3 has a primary side (upstream side) air-bleeding mechanism 31 and a secondary side (downstream side) air-bleeding mechanism 32. Hereinafter, in the filter container system 1 of the present invention, the upstream side of the flow of the filtration fluid is referred to as the primary side, and the downstream side is referred to as the secondary side. In the filter container 3, the side with the air-bleeding mechanism 31 on the primary side and the air-bleeding mechanism 32 on the secondary side is defined as the upper side, while the side without the air-bleeding mechanism 31 and the air-bleeding mechanism 32 is defined as the lower side. In the case where the filter container 3 is in use, the side with the air-bleeding mechanism 31 and the air-bleeding mechanism 32 is used as the upper side. In this specification, regarding the filter container system 1, it is described to refer the definitions of the upper side and the lower side, in the under-usage state. The filter container 3 has an opening communicating with the hollow portion of the filter container 3 on the lower side. The filter cartridge 2 is attached to the hollow portion of the filter container 3 through the opening. Further, in this specification, a state in which the filter cartridge 2 is stored inside the filter container 3 is defined as a set-in state.

The inner surface of the upper portion of the filter container 3 has a partition 5 is provided to be attached to completely surround the air-bleeding port 32a of the air-bleeding mechanism 32 and extend from the inner surface thereof. The partition 5 has typically cylindrical shape, but may have various shapes as long as it completely surrounds the air-bleeding port 32a. In the set-in state where the filter cartridge 2 is stored inside the filter container 3, the end portion 5a of the partition 5 is entirely in contact with the end portion 2a of the filter cartridge 2. The partition 5 is configured to surround the opening of the pipe line 24 at the end portion 2a of the filter cartridge 2 in a state where the entire end portion 5a of the partition 5 is in contact with the end portion 2a of the filter cartridge 2. A space surrounded by the inner surface of the filter container 3, the end portion 2a of the filter cartridge 2 and the partition 5 is defined as an air-bleeding chamber 4. That is, the air-bleeding chamber 4 is formed by contacting the end portion 5a of the partition 5 with the end portion 2a of the filter cartridge 2.

In the set-in state where the filter cartridge 2 is stored inside the filter container 3, the filter cartridge 2 is fixed to the filter container 3 so that the filter cartridge 2 has a gap with a width sufficient for the filtration fluid to flow between the inner surface of the filter container 3 and the filter cartridge 2. A filtration fluid can flow into the filter 21 inside the filter cartridge 2 through the outer surface of the filter cartridge from the gap.

The pipe 6 is arranged inside the flow path 24 of the filter cartridge 2. The pipe 6 is a cylindrical shaped member with a hollow portion having a first opening 6a and a second opening 6b at both ends, and has a pipe shape whose both ends extending through the pipe shape without holes on the peripheral surface of the cylindrical shape. The pipe 6 has a gap flow path 24a formed along the outer periphery of the pipe 6 to extend in the direction toward the first opening 6a and the second opening 6b of both ends of the pipe 6 between the outer surface of the pipe 6 and the inner surface of the flow path 24 of the filter cartridge 2. For example, the pipe 6 is fixed to the end 2b of the filter cartridge 2 opposite to the end portion 2a, in the state where a gap flow path 24a is formed. The surface of the filter cartridge 2 on the side of the gap flow path 24a is formed by a porous structure, such that the filtration fluid can flow through the filter 21 from the outer surface of the filter cartridge 2 to the surface of the filter cartridge 2 on the side of the gap flow path 24a.

The pipe 6 is fixed to the filter cartridge 2 to be positioned to extend in the vertical direction in the state where the filter cartridge 2 is stored in the filter container 3 and in use. Since the inner surface of the gap flow path 24a corresponds to the inner surface of the flow path 24, the opening at the end of the gap flow path 24a is located within the area surrounded by the end portion 5a of the partition 5, and the gap flow path 24a is fluidly communicate with the air-bleeding chamber 4.The upper end of the gap flow path 24a communicating with the air-bleeding chamber 4 and the lower end of the gap flow path 24a on the opposite side are sealed with each other.

The pipe 6 has a fluidly impermeable wall structure in which the outer surface of the pipe 6 and the hollow portion of the pipe 6 are not in fluid communication. In the set-in state where the pipe 6 is provided inside the gap flow path 24a and the filter cartridge 2 is stored in the filter container 3, the first opening 6a at one end of the pipe 6 reaches the air-bleeding chamber 4 and the hollow portion of the pipe 6 fluidly communicates with the air-bleeding chamber 4 at the first opening 6a. Thus, in the set-in state, the air-bleeding chamber 4 fluidly communicates only with the air-bleeding port 32a of the air-bleeding mechanism 32, the gap flow path 24a, and the first opening 6a at one end of the pipe, and is fluidly isolated from the other portions of the interior of the filter container 3.

In the set-in state where the filter cartridge 2 is stored in the filter container 3 and in the under-usage state, the pipe 6 and the gap flow path 24a are positioned to extend in the vertical direction, the air-bleeding port 32 a is located on the upper side of the air-bleeding chamber 4.

Next, the entire flow path of the filtration fluid defined by the filter container system 1 of the Embodiment 1 will be described. A filtration fluid typically includes a liquid. The filter container 3 is fitted with the filter base 40 and fixed to the filter base 40 by a fixture or the like. A filtration fluid is supplied to the interior of the filter container 3 from a fluid source through the inlet 41a of the flow path 41. The inlet 41a of the flow path 41 is arranged on the lower side of the filter container 3. A predetermined pressure is applied to the inlet 41a of the flow path 41 so that the predetermined pressure is defined as the primary side pressure of the filtration fluid in the filter container system 1. The filtration fluid to which a predetermined pressure is applied flows through the gap formed between the inner surface of the filter container 3 and the filter cartridge 2 from the lower side to the upper side of the filter container 3 along the outer peripheral surface of the filter cartridge 2. In the case where the filtration fluid flows up along the outer peripheral surface of the filter cartridge 2 through the gap formed between the inner surface of the filter container 3 and the filter cartridge 2, it flows from the outer peripheral surface of the filter cartridge 2 through the internal filter 21 into the gap flow path 24a inside the filter cartridge 2. Since the lower end of the gap flow path 24a is sealed, the filtration fluid flowing into the gap flow path 24a causes the flow of the filtration fluid towards the top of the filter container 3 by the gap flow path 24a.

A filtration fluid flowing toward the top of the filter container 3 reaches the air-bleeding chamber 4. In addition to the pressure on the primary side, the pipe 6 causes the flow of the filtration fluid that reaches the air-bleeding chamber 4 toward the lower portion of the filter container 3 from the air-bleeding chamber 4 by gravity. That is, the air-bleeding chamber 4 is located at the turn-back point between the flow of the filtration fluid toward the upper side of the filter container 3 and the flow of the filtration fluid toward the lower side of the filter container 3. By the above processes, in the air-bleeding chamber 4, the air contained in the flow of filtration fluid is naturally separated so that the air remains in the air-bleeding chamber 4, and the filtration fluid flows through the pipe 6 to the bottom of the filter container 3. The air remaining in the air-bleeding chamber 4 is discharged outside by the air-bleeding mechanism 32 through the air-bleeding port 32a on the secondary side. The air-bleeding mechanism 31 on the primary side communicates with the gap formed between the inner surface of the filter container 3 and the filter cartridge 2, and functions so that air-bleeding on the primary side of the filtration fluid can be achieved. The filtration fluid flowed through the pipe 6 to the bottom of the filter container 3 is discharged from the filter container system 1 through the discharge pipe 42 from the discharge port 42a at the bottom of the filter container 3.

As described above, in the filter container system 1 of the present invention, the air-bleeding in which the air mixed into the filtration fluid can be naturally separated from the filtration fluid with a simple structure can be achieved.

### [Embodiment 2]

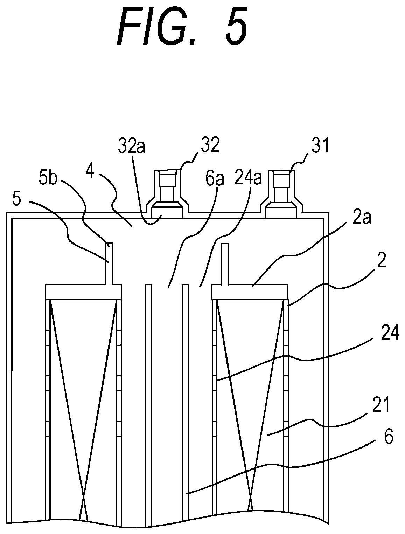

Next, Embodiment 2 of the present invention is explained with reference to Figs. 1, 2 and 5. Embodiment 1 and Embodiment 2 have the same configuration in the set-in state and the under-usage state. Hereinafter, the description of the same parts as in the Embodiment 1 is omitted, and only the parts of the Embodiment 2 that differ from the Embodiment 1 is described. In Embodiment 1, the partition 5 is attached to the inner surface of the filter container 3. However, the partition 5 may also be attached to the filter cartridge 2. Fig. 5 shows Embodiment 2 in which the partition 5 is attached to the filter cartridge.

That is, in Embodiment 2, the partition 5 is attached to extend from the end portion 2a of the filter cartridge 2. In the Embodiment 2, the air-bleeding chamber 4 is formed by contacting the end portion 5b of the partition 5 with the inner surface of the upper portion of the filter container 3. Other structures including the configuration of the formed air-bleeding chamber 4 are the same. Thus, the partition 5 can be arranged in the filter container 3 or the filter cartridge 2 as long as the air-bleeding chamber 4 can be formed. Besides this, it is also possible to dispose the partition 5 as an independent component (not shown).

### [Embodiment 3]

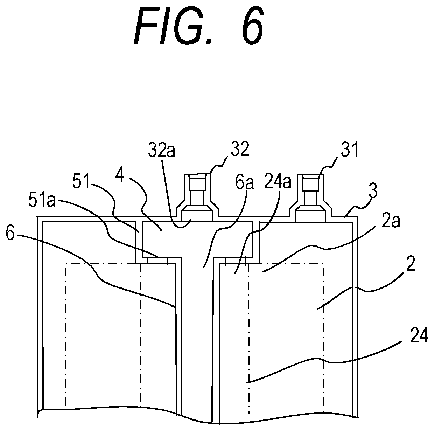

Next, Embodiment 3 of the present invention is described with reference to Figs. 1, 2 and 6. Embodiment 1 and Embodiment 3 have the same configuration in the set-in state and the under-usage state. Hereinafter, the description of the same parts as in the Embodiment 1 is omitted, and only the parts of the Embodiment 3 that differ from the Embodiment 1 is described. Although the pipe 6 is attached to the filter cartridge 2 in the Embodiment 1, it may be attached to the filter container 3. Fig. 6 shows embodiment 3 in which the pipe 6 is attached to the filter container 3.

For example, as shown in Fig. 6, the partition forming the air-bleeding chamber 4 can be configured to hold the pipe 6. In this case, in the set-in state, the partition 51 holds the pipe 6 in the gap flow path 24a of the filter cartridge 2 as in the Embodiment 1. In the case where the partition 51 is configured to hold the pipe 6, it is necessary to provide an opening in the partition 51 that allows fluid communication between the air-bleeding chamber 4 and the gap flow path 24a.

It is also possible to fix the partition 51 to the filter container 3 rather than the partition 51 holding the pipe 6. As long as the pipe 6 can be configured as shown in Figs. 1 and 2 of the Embodiment 1, the pipe 6 is not limited to being fixed to the filter cartridge 2, so that various aspects in which the filter container 3 is fixed can be applied.

### Reference Signs List

- 1: a filter container system
- 2: a filter cartridge
- 21: a filter
- 33: a filter container
- 4: an air-bleeding chamber
- 5, 51: a partition
- 6: a pipe
- 24: a flow path
- 24a: a gap flow path

## Claims

1. A filter container system (1) comprising:
a filter cartridge (2) including a filter (21) for filtering a fluid, the filter (21) having a flow path (24) having a cylindrical shape on an inside of the filter (21) between a first opening at one end of the filter (21) and a second opening at another end of the filter (21);
a filter container (3) in which the filter cartridge (2) is detachably set inside of the filter container (3), the filter container (3) having an air-bleeding mechanism (32) at an upper side of the filter container (3); and
a partition (5) contacting with the filter cartridge (2) and the inside of the filter container (3), the partition (5) causes a formation of an air-bleeding chamber (4) communicating with an air-bleeding opening (32a) of the air-bleeding mechanism (32),
wherein the filter container (3) has a set-in state in which the filter cartridge (2) is set in the inside of the filter container (3),
**characterized by**
a pipe (6) extending in a vertical direction in the flow path (24), to communicate with said inside of the filter (21),
wherein in the set-in state, the pipe (6) extends into the inside of the flow path (24) to have a gap flow path (24a) between the inside of the flow path (24) and an outer surface of the pipe (6) so that an one end of the pipe (6) reaches to the air-bleeding chamber (4), the partition (5) contacts with the end of the filter (21), the air-bleeding chamber (4) fluidly communicate only with the gap flow path (24a), the pipe (6) and air-bleeding opening (32a), and the gap flow path (24a) is configured to communicate with the inside of the pipe (6) through the air-bleeding chamber (4),
wherein in the set-in state, the filter container system (1) is configured to define a flow path is defined so that the fluid flows from an inlet (41a) of the bottom of the filter container (3), the fluid flows into the gap flow path (24a) and reaches the air-bleeding chamber (4) through the filter (21) from an outer surface of the filter (21), and the fluid is discharged out through the discharge outlet (42a) of the bottom of the filter container (3) through the pipe (6) from the air-bleeding chamber (4).

2. A filter container system (1) according to claim 1,
wherein the gap flow path (24a) causes a fluid flow direction to the upper side of the filter container (3),
wherein the pipe (6) causes a fluid flow direction to the bottom side of the filter container (3) from the air-bleeding chamber (4), and
wherein the air-bleeding chamber (4) is provided at a turn-back portion between the fluid flow direction to the upper side and the fluid flow direction to the bottom side.

3. A filter container system (1) according to claim 2,
wherein the partition (5) is configured to extend from an inside surface of the upper side of the filter container (3) so that the formation of the air-bleeding chamber (4) is caused by bringing an end (5a) of the partition (5) into contact with the end (2a) of the filter cartridge (2).

4. A filter container system (1) according to claim 2,
wherein the partition (5) is configured to extend from an end (2a) of the filter cartridge (2) so that the formation of the air-bleeding chamber (4) is caused by bringing an end (5a) of the partition (5) into contact with an inside surface of the upper side of the filter container (3).

5. A filter container system (1) according to claim 3 or 4, wherein the pipe (6) is fixed onto the filter cartridge (2).

6. A filter container system (1) according to claim 3 or 4, wherein the pipe (6) is fixed onto the filter container (3).

## Patentansprüche

1. Ein Filterbehältersystem (1), umfassend:
eine Filterpatrone (2) mit einem Filter (21) zum Filtern einer Flüssigkeit, wobei der Filter (21) einen Strömungsweg (24) mit einer zylindrischen Form auf einer Innenseite des Filters (21) zwischen einer ersten Öffnung an einem Ende des Filters (21) und einer zweiten Öffnung an einem anderen Ende des Filters (21) aufweist;
einen Filterbehälter (3), in dem die Filterpatrone (2) lösbar im Inneren des Filterbehälters (3) angeordnet ist, wobei der Filterbehälter (3) an einer Oberseite des Filterbehälters (3) einen Entlüftungsmechanismus (32) aufweist; und
eine Trennwand (5), die mit der Filterpatrone (2) und der Innenseite des Filterbehälters (3) in Kontakt steht, wobei die Trennwand (5) die Bildung einer Entlüftungskammer (4) bewirkt, die mit einer Entlüftungsöffnung (32a) des Entlüftungsmechanismus (32) in Verbindung steht, wobei
der Filterbehälter (3) einen Einsetzzustand aufweist, in dem die Filterpatrone (2) in das Innere des Filterbehälters (3) eingesetzt ist,
**gekennzeichnet durch**
ein Rohr (6), das sich in vertikaler Richtung im Strömungsweg (24) erstreckt, um mit dem Inneren des Filters (21) in Verbindung zu stehen, wobei
sich das Rohr (6) im Einsetzzustand in das Innere des Strömungswegs (24) erstreckt, um einen Spaltströmungsweg (24a) zwischen dem Inneren des Strömungswegs (24) und einer Außenfläche des Rohrs (6) zu bilden, so dass ein Ende des Rohrs (6) bis zur Entlüftungskammer (4) reicht, die Trennwand (5) mit dem Ende des Filters (21) in Kontakt steht, die Entlüftungskammer (4) nur mit dem Spaltströmungsweg (24a), dem Rohr (6) und der Entlüftungsöffnung (32a) in Fluidverbindung steht und der Spaltströmungsweg (24a) so ausgebildet ist, dass er durch die Entlüftungskammer (4) mit dem Inneren des Rohrs (6) in Verbindung steht, wobei
im Einsetzzustand das Filterbehältersystem (1) konfiguriert ist, dass ein Strömungsweg definiert ist, so dass das Fluid von einem Einlass (41a) am Boden des Filterbehälters (3) strömt, das Fluid in den Spaltströmungsweg (24a) strömt und durch den Filter (21) von einer Außenfläche des Filters (21) aus die Entlüftungskammer (4) erreicht, und das Fluid aus der Entlüftungskammer (4) durch das Rohr (6) aus dem Auslass (42a) am Boden des Filterbehälters (3) ausgestoßen wird.

2. Das Filterbehältersystem (1) gemäß Anspruch 1, wobei
der Spaltströmungsweg (24a) eine Fluidströmungsrichtung zur Oberseite des Filterbehälters (3) bewirkt, wobei
das Rohr (6) eine Fluidströmungsrichtung von der Entlüftungskammer (4) zur Unterseite des Filterbehälters (3) bewirkt, und wobei
die Entlüftungskammer (4) an einer Umkehrstelle zwischen der Strömungsrichtung zur Oberseite und der Strömungsrichtung zur Unterseite angeordnet ist.

3. Das Filterbehältersystem (1) gemäß Anspruch 2, wobei
die Trennwand (5) so ausgebildet ist, dass sie sich von einer Innenfläche der Oberseite des Filterbehälters (3) aus erstreckt, so dass die Bildung der Entlüftungskammer (4) dadurch bewirkt wird, dass ein Ende (5a) der Trennwand (5) mit dem Ende (2a) der Filterpatrone (2) in Kontakt gebracht wird.

4. Das Filterbehältersystem (1) gemäß Anspruch 2, wobei
die Trennwand (5) konfiguriert ist, sich von einem Ende (2a) der Filterpatrone (2) aus zu erstrecken, so dass die Bildung der Entlüftungskammer (4) dadurch bewirkt wird, dass ein Ende (5a) der Trennwand (5) mit einer Innenfläche der Oberseite des Filterbehälters (3) in Kontakt gebracht wird.

5. Das Filterbehältersystem (1) gemäß Anspruch 3 oder 4, wobei das Rohr (6) an der Filterpatrone (2) befestigt ist.

6. Das Filterbehältersystem (1) gemäß Anspruch 3 oder 4, wobei das Rohr (6) an dem Filterbehälter (3) befestigt ist.

## Revendications

1. Système de contenant de filtre (1) comprenant :
une cartouche de filtre (2) incluant un filtre (21) pour filtrer un fluide, le filtre (21) présentant un trajet d'écoulement (24) présentant une forme cylindrique sur un intérieur du filtre (21) entre une première ouverture à une extrémité du filtre (21) et une deuxième ouverture à une autre extrémité du filtre (21) ;
un contenant de filtre (3) dans lequel la cartouche de filtre (2) est placée de manière amovible à l'intérieur du contenant de filtre (3), le contenant de filtre (3) présentant un mécanisme de purge d'air (32) au niveau d'un côté supérieur du contenant de filtre (3) ; et
une séparation (5) entrant en contact avec la cartouche de filtre (2) et l'intérieur du contenant de filtre (3), la séparation (5) induit une constitution d'une chambre de purge d'air (4) communiquant avec une ouverture de purge d'air (32a) du mécanisme de purge d'air (32),
dans lequel le contenant de filtre (3) présente un état installé dans lequel la cartouche de filtre (2) est installée à l'intérieur du contenant de filtre (3),
**caractérisé par**
un tube (6) s'étendant dans une direction verticale dans le trajet d'écoulement (24), pour communiquer avec ledit intérieur du filtre (21),
dans lequel dans l'état installé, le tube (6) s'étend dans l'intérieur du trajet d'écoulement (2) pour présenter un trajet **d'écoulement** par espacement (24a) entre l'intérieur du trajet **d'écoulement** (24) et une surface extérieure du tube (6) de sorte qu'une extrémité du tube (6) atteigne la chambre de purge **d'air** (4), la séparation (5) entre en contact avec l'extrémité du filtre (21), la chambre de purge d'air (4) communique de manière fluidique uniquement avec le trajet d'écoulement par espacement (24a), le tube (6) et une ouverture de purge d'air (32a), et le trajet d'écoulement par espacement (24a) est configuré pour communiquer avec l'intérieur du tube (6) à travers la chambre de purge d'air (4),
dans lequel dans l'état installé, le système de contenant de filtre (1) est configuré pour définir un trajet d'écoulement est défini de sorte que le fluide s'écoule depuis une entrée (41a) du fond du contenant de filtre (3), le fluide s'écoule dans le trajet d'écoulement par espacement (24a) et atteint la chambre de purge d'air (4) à travers le filtre (21) depuis une surface extérieure du filtre (21), et le fluide est déchargé à travers la sortie de décharge (42a) du fond du contenant de filtre (3) à travers le tube (6) depuis la chambre de purge d'air (4).

2. Système de contenant de filtre (1) selon la revendication 1,
dans lequel le trajet d'écoulement par espacement (24a) induit une direction d'écoulement de fluide vers le côté supérieur du contenant de filtre (3),
dans lequel le tube (6) induit une direction d'écoulement de fluide vers le côté de fond du contenant de filtre (3) depuis la chambre de purge d'air (4), et
dans lequel la chambre de purge d'air (4) est disposée au niveau d'une partie de retour entre la direction d'écoulement de fluide vers le côté supérieur et la direction d'écoulement de fluide vers le côté de fond.

3. Système de contenant de filtre (1) selon la revendication 2,
dans lequel la séparation (5) est configurée pour s'étendre depuis une surface intérieure du côté supérieur du contenant de filtre (3) de sorte que la formation de la chambre de purge d'air (4) est induite par la mise en contact d'une extrémité (5a) de la séparation (5) avec l'extrémité (2a) de la cartouche de filtre (2).

4. Système de contenant de filtre (1) selon la revendication 2,
dans lequel la séparation (5) est configurée pour s'étendre depuis une extrémité (2a) de la cartouche de filtre (2) de sorte que la formation de la chambre de purge d'air (4) est induite par la mise en contact d'une extrémité (5a) de la séparation (5) avec une surface intérieure du côté supérieur du contenant de filtre (3).

5. Système de contenant de filtre (1) selon la revendication 3 ou 4, dans lequel le tube (6) est fixé à la cartouche de filtre (2).

6. Système de contenant de filtre (1) selon la revendication 3 ou 4, dans lequel le tube (6) est fixé au contenant de filtre (3).
